# EUROPÄISCHE PATENTSCHRIFT

(11) **EP 2 369 907 B1**
(45) Veröffentlichungstag und Bekanntmachung des Hinweises auf die Patenterteilung: **13.03.2013**
(21) Anmeldenummer: 09784063.1
(22) Anmeldetag: 20.11.2009
(51) Int. Cl.: A01B 69/00, G05D 1/02, G06F 3/147, G05G 9/047

(54) **BEDIENSYSTEM FÜR EIN KRAFTFAHRZEUG**
OPERATING SYSTEM FOR A MOTOR VEHICLE
SYSTÈME DE COMMANDE POUR UN VÉHICULE AUTOMOBILE

(30) Priorität: 28.11.2008 DE 102008044174
(43) Veröffentlichungstag der Anmeldung: 05.10.2011
(73) Patentinhaber: Deere & Company, Moline, IL 61265-8098 (US)
(72) Erfinder: SCHREIBER, Michael, 67308 Immesheim (DE)
(74) Vertreter: Dehnhardt, Florian Christopher
(86) Internationale Anmeldenummer: PCT/EP2009/065573
(87) Internationale Veröffentlichungsnummer: WO 2010/060870

(56) Entgegenhaltungen:
- WO-A1-2008/011847
- US-A1- 2006 244 565
- US-A1- 2009 326 685
- Deere & Company: "Command Center armrest display"[Online] 19. Oktober 2007 (2007-10-19), XP002603399 John Deere USA Gefunden im Internet: URL:http://web.archive.org/web/20071019025 358/http://salesmanual.deere.com/sales/sal esmanual/en_NA/combines_headers/2008/featu re/combines/cab_controls/commandcenter_arm rest_display.html> [gefunden am 2010-10-05]
- ANONYMOUS: "Archived Results from Jan 01, 1996 - latest"[Online] XP002603410 The Way Back Machine Gefunden im Internet: URL:http://web.archive.org/web/*/salesmanu al.deere.com/sales/salesmanual/en_NA/combi nes_headers/2008/feature/combines/cab_cont rols/commandcenter_armrest_display.html> [gefunden am 2010-10-05]

## Beschreibung

Die Erfindung betrifft ein Bediensystem für ein Kraftfahrzeug, mit mindestens einem Bedienelement, das zur Bedienung einer zugehörigen fahrzeugbezogenen Funktion vorgesehen ist, und/oder mindestens einer Erfassungseinrichtung, die zur Ermittlung eines betriebsbedingt auftretenden Fahrzeugzustands ausgebildet ist, und mit einer Kontrolleinheit, die eine Anzeigeeinrichtung in Abhängigkeit einer Betätigung des mindestens einen Bedienelements und/oder des ermittelten Fahrzeugzustands derart ansteuert, dass von der Anzeigeeinrichtung ein der zu bedienenden fahrzeugbezogenen Funktion und/oder dem ermittelten Fahrzeugzustand zugeordneter Anzeigeinhalt dargestellt wird.

Ein derartiges mikroprozessorgesteuertes Bediensystem ist beispielsweise unter der Bezeichnung "CommandCenter" bei John Deere Erntemaschinen der Serie 70 bekannt (http://web.archive. org/web/20071019025358/http://salesmanual.deere.com/sales/sale smanual/en_NA/combines_headers/2008/feature/combines/cab_contr ols/commandcenter_armrest_display.html). Das Bediensystem umfasst mehrere, an einer Seitenkonsole einer Fahrerkabine angebrachte Bedienelemente, die zur manuellen Bedienung unterschiedlicher fahrzeugbezogener Funktionen vorgesehen sind. Des Weiteren ist eine an der Seitenkonsole schwenkbar angebrachte Anzeigeeinrichtung in Gestalt eines Flachbildschirms vorgesehen, der die mittels der Bedienelemente vorgenommenen Einstellungen bzw. Bedienhandlungen sowie ergänzende betriebsbezogene Informationen bzw. Parameter der Erntemaschine bildlich und/oder alphanumerisch darstellt. Da das bekannte Bediensystem eine in sich abgeschlossene Funktionseinheit bildet, ist eine Funktionserweiterung bzw. -veränderung nur im Rahmen eines aufwändigen Software-Updates möglich.

Es ist daher Aufgabe der vorliegenden Erfindung, ein im Hinblick auf eine Funktionserweiterung bzw. -veränderung verbessertes Bediensystem der eingangs genannten Art anzugeben.

Diese Aufgabe wird durch ein Bediensystem für ein Kraftfahrzeug mit den Merkmalen des Patentanspruchs 1 gelöst.

Das erfindungsgemäße Bediensystem für ein Kraftfahrzeug umfasst mindestens ein Bedienelement, das zur Bedienung einer zugehörigen fahrzeugbezogenen Funktion vorgesehen ist, und/oder mindestens eine Erfassungseinrichtung, die zur Ermittlung eines betriebsbedingt auftretenden Fahrzeugzustands ausgebildet ist. Des Weiteren ist eine Kontrolleinheit vorhanden, die eine Anzeigeeinrichtung in Abhängigkeit einer Betätigung des mindestens einen Bedienelements und/oder des ermittelten Fahrzeugzustands derart ansteuert, dass von der Anzeigeeinrichtung ein der zu bedienenden fahrzeugbezogenen Funktion und/oder des ermittelten Fahrzeugzustands zugeordneter Anzeigeinhalt dargestellt wird. Hierbei stellt die Kontrolleinheit zur Ansteuerung der Anzeigeeinrichtung mittels einer RFID-Leseeinheit eine Datenaustauschverbindung mit einem mit der Anzeigeeinrichtung zusammenwirkenden RFID-Transponder her, wobei der auf der Anzeigeeinrichtung darzustellende Anzeigeeinhalt in einem dem RFID-Transponder zugeordneten Datenspeicher abgelegt ist und die Kontrolleinheit bei Initiierung des Bediensystems einen selbsttätigen Konfigurationsvorgang zur Anpassung des Bedien - und/oder Anzeigeumfangs des Bediensystems entsprechend der in dem Datenspeicher abgelegten Anzeigeinhalte vornimmt.

Die Initiierung des Bediensystems erfolgt beispielsweise beim Anlassen des Kraftfahrzeugs, wobei die Kontrolleinheit die zur Verfügung stehenden Anzeigeinhalte mittels der RFID-Leseeinheit sequentiell aus den Datenspeichern der RFID-Transponder ausliest und den Bedien- bzw. Anzeigeumfang des Bediensystems entsprechend der in den Datenspeichern abgelegten Anzeigeinhalte anpasst.

Dies ist vor allem bei modularen Bedienkonzepten im Sinne der Verwirklichung einer sogenannten Plug-and-Play Funktion von Vorteil, bei denen eine Funktionserweiterung bzw. -veränderung durch Hinzufügen bzw. Austausch einzelner Bedienelemente oder ganzer Bedienelementbaugruppen erfolgt.

Bei RFID (RFID - Radio Frequency Identification) handelt es sich um ein System zur drahtlosen Übertragung von Daten zwischen einem Datenträger, dem sogenannten RFID-Transponder bzw. RFID-Tag, und einer RFID-Leseeinheit.

Der RFID-Transponder weist typischerweise eine Antenne in Gestalt einer Spule, einen analogen Hochfrequenzschaltkreis zum Abrufen von in einem Datenspeicher abgelegten Daten sowie eine Datenverarbeitungseinheit zwischen dem Datenspeicher und dem analogen Hochfrequenzschaltkreis auf. Der Datenspeicher kann insbesondere mehrfach beschreibbar sein (Read/Write Memory), sodass sich dessen Speicherinhalt auch nachträglich verändern bzw. anpassen lässt. Alternativ ist auch die Verwendung eines einmal beschreibbaren Datenspeichers denkbar(Read Only Memory).

Zur Herstellung einer Datenaustauschverbindung mit dem RFID-Transponder erzeugt die RFID-Leseeinheit ein elektromagnetisches Feld, das von der Antennenspule des RFID-Transponders empfangen wird. Hierdurch wird der im RFID-Transponder enthaltene Datenspeicher aktiviert, sodass sich über dessen Antenne codierte Befehle mittels der RFID-Leseeinheit aus- und einlesen lassen. Der RFID-Transponder strahlt dabei kein eigenes elektromagnetisches Feld aus, sondern moduliert dasjenige der RFID-Leseeinheit. Das elektromagnetische Feld der RFID-Leseeinheit weist je nach verwendeter Frequenz und Leistungsfähigkeit eine Reichweite von einem Zentimeter bis zu dreißig Metern oder mehr auf.

Aufgrund der drahtlos hergestellten Datenaustauschverbindung lässt sich die mittels des RFID-Transponders angesteuerte Anzeigeeinrichtung an nahezu jeder beliebigen Stelle im Kraftfahrzeug anbringen. Insbesondere ist diese nicht auf eine Vernetzung mit einem in dem Kraftfahrzeug fest verlegten CAN-Datenbus angewiesen. Es besteht daher weitgehend Freiheit bezüglich der Anbringung der Anzeigeeinrichtung im Kraftfahrzeug.

Bei dem Kraftfahrzeug handelt es sich um ein landwirtschaftliches Nutzfahrzeug, beispielsweise einen Traktor, eine Erntemaschine, einen Feldhäcksler oder eine Spritzmaschine. Es sei jedoch an dieser Stelle angemerkt, dass sich die Verwendung des erfindungsgemäßen Bediensystems nicht auf einen bestimmten Fahrzeugtyp und/oder Einsatzzweck beschränkt.

Die auf der Anzeigeeinrichtung darzustellenden Anzeigeeinhalte können sich auf beliebige zu bedienende Funktionen bzw. Fahrzustände, wie sie beim Betrieb des Kraftfahrzeugs oder daran anbringbarer Zusatz- bzw. Anbaugeräte auftreten, beziehen. Bei den Zusatz- bzw. Anbaugeräten kann es sich beispielsweise um einen an einem Traktor anbringbaren Frontlader, eine Sämaschine, eine Ballenpresse oder dergleichen handeln. Vorteilhafte Ausführungen des erfindungsgemäßen Bediensystems gehen aus den Unteransprüchen hervor.

Insbesondere können in dem Datenspeicher mehrere auf der Anzeigeeinrichtung darzustellende Anzeigeinhalte entsprechend unterschiedlicher zu bedienender fahrzeugbezogener Funktionen und/oder betriebsbedingt auftretender Fahrzeugzustände abgelegt sein. Jedem Anzeigeinhalt ist in eindeutiger Weise ein mittels der RFID-Leseeinheit auswählbares Identifikationsmerkmal in Gestalt eines numerischen Codes zugeordnet. Durch Auswahl eines bestimmten Identifikationsmerkmals wird der zugehörige Anzeigeinhalt aus dem Datenspeicher abgerufen und anschließend einem Anzeigentreiber zum Zwecke der Darstellung auf der Anzeigeeinrichtung zugeführt.

Mit anderen Worten ermittelt die Kontrolleinheit ein der Betätigung des mindestens einen Bedienelements und/oder des ermittelten Fahrzeugzustands zugeordnetes Identifikationsmerkmal in Gestalt eines zugehörigen numerisches Codes. Dieser wird mittels der RFID-Leseeinheit drahtlos als codierter Befehl an einen oder mehrere im Kraftfahrzeug örtlich verteilt angebrachte RFID-Transponder übertragen. Jeder der RFID-Transponder überprüft, ob ein dem eingelesenen numerischen Code entsprechender Anzeigeinhalt im Datenspeicher abgelegt ist. Ist dies der Fall, so wird der entsprechende Anzeigeinhalt durch geeignete Ansteuerung des Anzeigentreibers auf der jeweiligen Anzeigeeinrichtung dargestellt.

Die in dem Datenspeicher abgelegten Anzeigeinhalte können Bestandteil einer menübasierten Benutzeroberfläche zur Bedienung einer Vielzahl von fahrzeugbezogenen Funktionen sein. Derartige Benutzeroberflächen umfassen eine hierarchisch gegliederte Menüstruktur mit mehreren Bedienebenen, wobei jede der Bedienebenen einen oder mehrere Menüeinträge entsprechend zugehöriger zu bedienender fahrzeugbezogener Funktionen und/oder betriebsbedingt auftretender Fahrzeugzustände umfasst. Hierbei ist es denkbar, nach Aufrufen einer bestimmten Menüebene sämtliche von dieser umfasste Menüeinträge oder aber lediglich einige ausgewählte Menüeinträge auf der Anzeigeeinrichtung darzustellen.

Im einfachsten Fall handelt es sich bei dem mindestens einen Bedienelement um einen Drucktaster, einen Wippschalter, einen Schiebregler oder dergleichen. Das mindestens eine Bedienelement kann jedoch auch zur Bedienung einer Vielzahl von fahrzeugbezogenen Funktionen ausgebildet sein. Hierbei ist die Verwendung eines multifunktionalen Bedienelements mit mehreren Verstell- bzw. Betätigungsfreiheitsgraden denkbar. Dieses kann insbesondere zur Bedienung einer menübasierten Bedienoberfläche als sogenannter Dreh-Drück-Geber ausgebildet sein, wobei durch Drehen des Bedienelements eine Navigation in der hierarchisch gegliederten Menüstruktur und durch Drücken eine Auswahl eines bestimmten Menüeintrags möglich ist. Alternativ kann das multifunktionale Bedienelement auch als Joystick ausgebildet sein, wobei der Joystick weitere Bedienelemente in Gestalt von Drucktastern oder eines Wippschalters zur Steuerung zusätzlicher fahrzeugbezogener Funktionen aufweisen kann.

Ferner ist es vorstellbar, dass die mittels des mindestens einen Bedienelements zu bedienende fahrzeugbezogene Funktion fahrerseitig vorgebbar ist. In diesem Fall lassen sich häufig gebrauchte fahrzeugbezogene Funktionen einem bestimmten Bedienelement zuordnen und bei Bedarf unmittelbar aufrufen. Das Bedienelement kann hierbei in unmittelbarer räumlicher Beziehung zur Anzeigeeinrichtung angeordnet sein, beispielsweise als sogenannte Favoritentaste im Randbereich der Anzeigeeinrichtung.

Der RFID-Transponder ist vorzugsweise als integrierter CMOS-Schaltkreis (CMOS - Complementary Metal Oxide Semiconductor) baulich in die Anzeigeeinrichtung eingebunden. Die Antenne kann spiralförmig im Bereich der Rückseite der Anzeigeeinrichtung aufgedruckt sein.

Insbesondere ist es möglich, die Anzeigeeinrichtung als folienartiges, vorzugsweise flexibles Anzeigeelement auszubilden. Ein derartiges Anzeigeelement geht beispielsweise aus der DE 10 2005 031 448 A1 hervor. Diese beschreibt eine aktivierbare optische Schicht, die zwischen einer oberen und einer unteren Elektrodenschicht angeordnet ist und eine Vielzahl von in einer Polymermatrix eingebundene Flüssigkristallbläschen mit einem Durchmesser von 0,1 µm bis 40 µm aufweist. Die Polymermatrix kann beispielsweise aus polymerisierten Monomeren mit einer Schichtdicke von 5 µm bis 40 µm bestehen. Die Flüssigkristalle werden in einem elektrischen Feld ausgerichtet, das zwischen der oberen und unteren Elektrodenschicht durch Anlegen einer entsprechenden Steuerspannung erzeugt wird. Die aktivierbare optische Schicht kann insbesondere derart ausgebildet sein, dass diese Bereiche aufweist, die eine Darstellung bildlicher und/oder alphanumerischer Anzeigeinhalte ermöglichen. Der RFID-Transponder ist in diesem Fall als organischer (polymerer) CMOS-Schaltkreis baulich in die Polymermatrix des folienartigen Anzeigeelements eingebunden.

Denkbar ist auch eine transparente oder semitransparente Ausbildung des folienartigen Anzeigeelements, sodass dieses beispielsweise auf eine Windschutzscheibe des Kraftfahrzeugs aufbringbar ist und eine Durchlichtdarstellung der darzustellenden Anzeigeinhalte im primären Sichtfeld des Fahrers erlaubt.

Das folienartige Anzeigeelement kann eine Klebefläche zur Anbringung an einer Oberfläche des mindestens einen Bedienelements und/oder eines Verkleidungselements des Kraftfahrzeugs aufweisen. Das Anzeigeelement lässt sich in diesem Fall problemlos auch nachträglich im Kraftfahrzeug anbringen.

Vorzugsweise wird die Anzeigeeinrichtung mittels des RFID-Transponders mit elektrischer Energie versorgt, sodass die Verwendung einer separaten elektrischen Energiequelle entfallen kann.

Hierbei wird grundsätzlich zwischen passiven und aktiven RFID-Transpondern unterschieden. Passive RFID-Transponder verfügen über keine eigene Stromversorgung und gewinnen die zum Betrieb erforderliche elektrische Energie aus einem in der Antennenspule erzeugten Induktionsstrom. Die Erzeugung des Induktionsstroms kann entweder durch Bestrahlung der Antennenspule mittels des elektromagnetischen Feldes der RFID-Leseeinheit oder aber durch Verwendung einer separaten elektromagnetischen Strahlungsquelle erfolgen. Aktive RFID-Transponder beziehen ihre elektrische Energie hingegen aus einer eigenen Stromversorgung, beispielsweise einem Akkumulator, einer Batterie, einem Superkondensator, einem photoelektrischen Element (Solarzelle) oder dergleichen.

Im vorliegenden Fall wird eine passive Ausbildung des RFID-Transponders bevorzugt, da diese eine zeitlich unbegrenzte bzw. von den Lichtverhältnissen unabhängige Darstellung der Anzeigeinhalte durch Nutzung des mittels der RFID-Leseeinheit ausgestrahlten elektromagnetischen Feldes ermöglicht.

Das erfindungsgemäße Bediensystem für ein Kraftfahrzeug wird im Folgenden anhand der beigefügten Zeichnungen näher erläutert. Es zeigen:
- Fig. 1: ein Ausführungsbeispiel eines erfindungsgemäßen Bediensystems für ein Kraftfahrzeug, und
- Fig. 2: ein schematisches Funktionsdiagramm des erfindungsgemäßen Bediensystems.

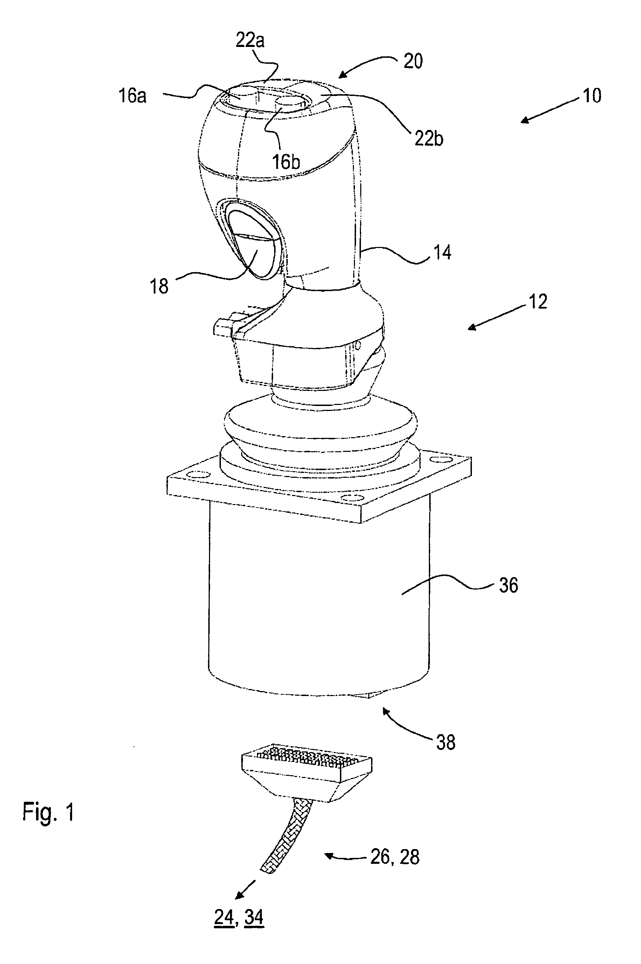

Fig. 1 zeigt ein Ausführungsbeispiel eines erfindungsgemäßen Bediensystems für ein nicht dargestelltes Kraftfahrzeug. Bei dem Kraftfahrzeug soll es sich im vorliegenden Fall um ein landwirtschaftliches Nutzfahrzeug, genauer gesagt um einen Traktor, mit einem daran anbringbaren Zusatz- bzw. Anbaugerät handeln.

Das Bediensystem 10 umfasst ein multifunktionales Bedienelement 12, das mehrere Verstell- bzw. Betätigungsfreiheitsgrade zur fahrerseitigen Bedienung einer Vielzahl zugehöriger fahrzeugbezogener Funktionen aufweist. Das in einer Bedien- bzw. Seitenkonsole des Traktors anbringbare multifunktionale Bedienelement 12 weist ein primäres Bedienelement in Gestalt eines verkippbaren Joysticks 14 und sekundäre Bedienelemente in Gestalt von an der Oberseite des Joysticks 14 angeordneten Drucktastern 16i, i = a,b bzw. eines am Griffumfang des Joysticks 14 vorgesehenen Wippschalters 18 auf. Die Bedienelemente 14, 16i und 18 sind von herkömmlicher Bauart, sodass auf diese nicht näher eingegangen wird.

Das multifunktionale Bedienelement 12 ist im vorliegenden Fall zur Bedienung eines an dem Traktor anbringbaren Zusatz- bzw. Anbaugeräts in Gestalt eines Frontladers vorgesehen. Durch Verkippen des Joysticks 14 kann eine Schwinge des Frontladers gehoben bzw. gesenkt sowie ein an der Schwinge angeordneter Mistgreifer verstellt werden. Die Drucktaster 16i bzw. der Wippschalter 18 erlauben die Bedienung zusätzlicher fahrzeugbezogener Funktionen, beispielsweise ein Öffnen bzw. Schließen des Mistgreifers.

Gemäß einer möglichen Weiterbildung des Bediensystems 10 sind die mittels der Drucktaster 16i zu bedienenden fahrzeugbezogenen Funktionen zur Verwirklichung sogenannter Favoritentasten fahrerseitig vorgebbar. Auf diese Weise lassen sich häufig gebrauchte fahrzeugbezogene Funktionen bei Bedarf unmittelbar aufrufen.

Des Weiteren ist ein den Drucktastern 16i räumlich zugeordnetes Anzeigefeld 20 vorgesehen. Diese weist separate Anzeigeeinrichtungen 22i auf, die als folienartige, vorzugsweise flexible Anzeigeelemente ausgebildet sind. Jedes der Anzeigeelemente 22i umfasst eine aktivierbare optische Schicht, die zwischen einer oberen und unteren Elektrodenschicht angeordnet ist und eine Vielzahl von in einer Polymermatrix eingebundene Flüssigkristallbläschen mit einem Durchmesser von 0,1 µm bis 40 µm aufweist. Die Polymermatrix besteht aus polymerisierten Monomeren mit einer Schichtdicke von 5 µm bis 40 µm. Die Flüssigkristalle werden in einem elektrischen Feld ausgerichtet, das zwischen der oberen und unteren Elektrodenschicht durch Anlegen einer entsprechenden Steuerspannung erzeugt wird. Die aktivierbare optische Schicht ist derart ausgebildet, dass diese Bereiche aufweist, die eine Darstellung bildlicher und/oder alphanumerischer Anzeigeinhalte ermöglichen. Die folienartigen Anzeigeelemente 22i sind hierbei mittels einer rückseitigen Klebefläche auf der leicht gewölbten Oberseite des Joysticks 14 angebracht bzw. mit dieser verklebt.

Das multifunktionale Bedienelement 12 ist Bestandteil eines modularen Bedienkonzepts des Traktors, mithin also zur Erweiterung bzw. Anpassung des Funktionsumfangs nachrüstbar bzw. bei Bedarf gegen ein anderes Bedienelement austauschbar. Insofern hat die Darstellung des multifunktionalen Bedienelements 12 rein beispielhaften Charakter.

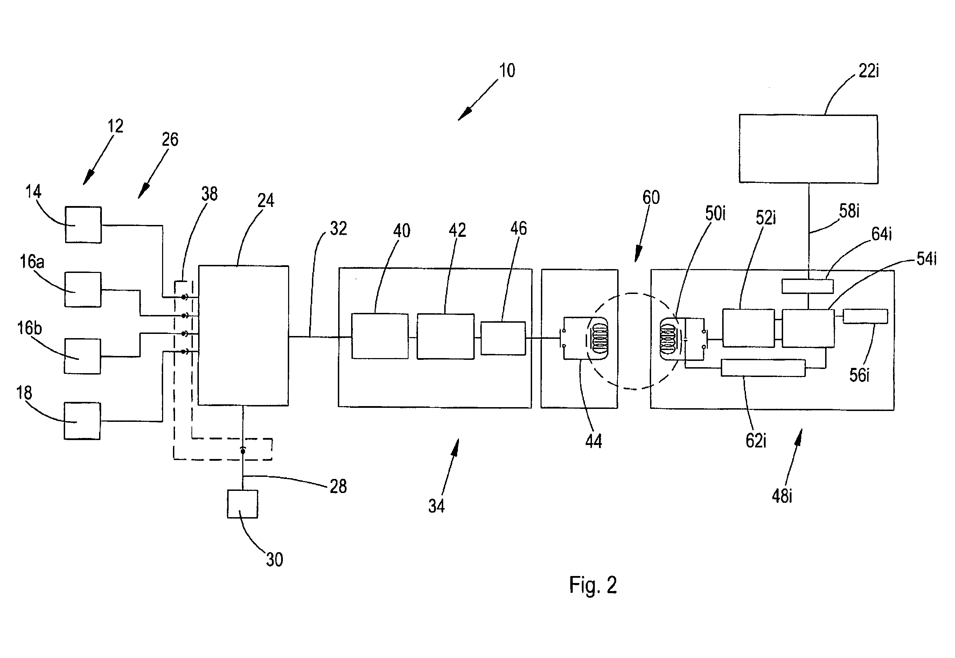

Fig. 2 zeigt ein schematisches Funktionsdiagramm des erfindungsgemäßen Bediensystems, das unter Bezugnahme auf Fig. 1 eingehend erläutert werden soll. Dabei sind hinsichtlich ihrer Funktion übereinstimmende bzw. vergleichbare Bauteile mit denselben Bezugszeichen gekennzeichnet.

Zentraler Bestandteil des Bediensystems 10 ist eine mikroprozessorgesteuerte Kontrolleinheit 24. Diese ist einerseits über Datenleitungen 26 mit den primären und sekundären Bedienelementen 14, 16i und 18 des multifunktionalen Bedienelements 12 und andererseits über eine Datenleitung 28 mit einer Erfassungseinrichtung 30 zur Ermittlung eines betriebsbedingt auftretenden Fahrzeugzustands verbunden. Beispielsgemäß handelt es sich bei der Erfassungseinrichtung 30 um einen Kraftsensor, der eine unzulässige Beladung des an dem Traktor anbringbaren Frontladers ermittelt.

Die Kontrolleinheit 24 steht über eine Datenleitung 32 mit einer im Traktor befindlichen RFID-Leseeinheit 34 in Verbindung. Der Anschluss der Kontrolleinheit 24 an das multifunktionale Bedienelement 12 erfolgt hierbei mittels eines an der Unterseite eines Basisgehäuses 36 des multifunktionalen Bedienelements 12 angeordneten Steckverbinders 38. Alternativ ist die RFID-Leseeinheit 34 im Basisgehäuse 36 des multifunktionalen Bedienelements 12 untergebracht, wobei diese über den Steckverbinder 38 über die Datenleitung 32 mit der im Traktor befindlichen Kontrolleinheit 24 kommuniziert. Bei der Datenleitung 32 kann es sich insbesondere um einen im Traktor fest verlegten CAN-Datenbus handeln.

Die RFID-Leseeinheit 34 umfasst eine Eingangsschnittstelle 40 zur Kommunikation mit der Kontrolleinheit 24 sowie eine Datenverarbeitungseinheit 42 zur Ansteuerung eines mit einer Antennenspule 44 zusammenwirkenden analogen Hochfrequenzschaltkreises 46.

Ein mit der Anzeigeeinrichtung 22i zusammenwirkender RFID-Transponder 48i weist eine Antenne 50i in Gestalt einer Spule, einen analogen·Hochfrequenzschaltkreis 52i sowie eine Datenverarbeitungseinheit 54i zum Abrufen von in einem Datenspeicher 56i abgelegten und auf der Anzeigeeinrichtung 22i darzustellenden Anzeigeeinhalten auf. Beispielsgemäß ist jeder der beiden Anzeigeeinrichtungen 22i ein eigener RFID-Transponder 48i zugeordnet, wobei diese über eigene Datenleitungen 58i miteinander in Verbindung stehen.

Zur Herstellung einer Datenaustauschverbindung mit dem RFID-Transponder 48i erzeugt die RFID-Leseeinheit 34 ein elektromagnetisches Feld 60, das von der Antennenspule 50i des RFID-Transponders 48i empfangen wird. Hierdurch wird der im RFID-Transponder 48i enthaltene Datenspeicher 56i aktiviert, sodass sich über die Antenne 50i codierte Befehle mittels der RFID-Leseeinheit 34 aus- und einlesen lassen.

Der RFID-Transponder 48i ist als organischer (polymerer) CMOS-Schaltkreis baulich in die Polymermatrix der als folienartiges Anzeigeelement ausgebildeten Anzeigeinrichtung 22i eingebunden. Die Antenne 50i ist spiralförmig im Bereich der Rückseite der Anzeigeeinrichtung 22i aufgedruckt.

Die Versorgung der Anzeigeeinrichtung 22i mit elektrischer Energie erfolgt mittels des RFID-Transponders 48i, sodass die Verwendung einer separaten elektrischen Energiequelle entfallen kann. Der RFID-Transponder 48i ist passiv ausgebildet, d.h. dieser gewinnt die zum Betrieb erforderliche elektrische Energie aus einem in der Antennenspule 50i erzeugten Induktionsstrom. Die Erzeugung des Induktionsstroms erfolgt dabei durch Bestrahlung der Antennenspule 50i mittels des elektromagnetischen Feldes 60 der RFID-Leseeinheit 34. Der erzeugte Induktionsstrom wird in einer Gleichrichtereinheit 62i zum Betrieb des RFID-Transponders 48i sowie der daran angeschlossenen Anzeigeeinrichtung 22i aufbereitet.

Jedem der in dem Datenspeicher 56i abgelegten Anzeigeinhalte ist in eindeutiger Weise ein mittels der RFID-Leseeinheit 34 auswählbares Identifikationsmerkmal in Gestalt eines numerischen Codes zugeordnet. Durch Auswahl eines bestimmten Identifikationsmerkmals wird der zugehörige Anzeigeinhalt aus dem Datenspeicher 56i abgerufen und anschließend einem Anzeigentreiber 64i zum Zwecke der Darstellung auf der Anzeigeeinrichtung 22i zugeführt.

Mit anderen Worten ermittelt die Kontrolleinheit 24 ein der Betätigung des multifunktionalen Bedienelements 12 und/oder des mittels des Kraftsensors 30 ermittelten Fahrzeugzustands zugeordnetes Identifikationsmerkmal in Gestalt eines zugehörigen numerisches Codes. Dieser wird mittels der RFID-Leseeinheit 34 drahtlos als codierter Befehl an den der Anzeigeeinrichtung 22i zugeordneten RFID-Transponder 48i übertragen. Der RFID-Transponder 48i überprüft, ob ein dem eingelesenen numerischen Code entsprechender Anzeigeinhalt im Datenspeicher 56i abgelegt ist. Ist dies der Fall, so wird der betreffende Anzeigeinhalt durch geeignete Ansteuerung des Anzeigentreibers 64i auf der Anzeigeeinrichtung 22i dargestellt.

Im vorliegenden Fall umfassen die Anzeigeinhalte piktogramm - und/oder textartige Informationen hinsichtlich der aktuellen Betriebsstellung des Frontladers, insbesondere der Schwinge bzw. des Mistgreifers. Über eine mittels des Kraftsensors 30 erkannte unzulässige Belastung des Frontladers wird durch Darstellung eines entsprechenden Warntexts bzw. -piktogramms informiert.

Das Bediensystem 10 sieht ferner die Durchführung eines selbsttätigen Konfigurationsvorgangs vor, bei dem die Kontrolleinheit 24 nach Initiierung des Bediensystems 10 - beispielsweise beim Anlassen des Traktors - die zur Verfügung stehenden Anzeigeinhalte mittels der RFID-Leseeinheit 34 sequentiell aus den Datenspeichern 56i der RFID-Transponder 48i ausliest und den Bedien- bzw. Anzeigeumfang des Bediensystems 10 entsprechend der in den Datenspeichern 56i abgelegten Anzeigeinhalte anpasst. Dies ist vor allem bei modularen Bedienkonzepten im Sinne der Verwirklichung einer sogenannten Plug-and-Play Funktion von Vorteil, bei denen - wie im Falle des vorliegenden Ausführungsbeispiels - eine Funktionserweiterung bzw. Funktionsveränderung durch Hinzufügen bzw. Austausch von Bedienelementen vorgesehen ist.

Eine mögliche Weiterbildung des Bediensystems 10 sieht vor, dass die in dem Datenspeicher 56i abgelegten Anzeigeinhalte Bestandteil einer menübasierten Benutzeroberfläche zur Bedienung einer Vielzahl von fahrzeugbezogenen Funktionen sind. Derartige Benutzeroberflächen umfassen eine hierarchisch gegliederte Menüstruktur mit mehreren Bedienebenen, wobei jede der Bedienebenen einen oder mehrere Menüeinträge entsprechend zugehöriger zu bedienender fahrzeugbezogener Funktionen und/oder betriebsbedingt auftretender Fahrzeugzustände umfasst. Hierbei ist es denkbar, nach Aufrufen einer bestimmten Menüebene sämtliche von dieser umfasste Menüeinträge oder aber lediglich einige ausgewählte Menüeinträge auf der Anzeigeeinrichtung 22i darzustellen.

## Patentansprüche

1. Bediensystem für ein Kraftfahrzeug, mit mindestens einem Bedienelement (12), das zur Bedienung einer zugehörigen fahrzeugbezogenen Funktion vorgesehen ist, und/oder mindestens einer Erfassungseinrichtung (30), die zur Ermittlung eines betriebsbedingt auftretenden Fahrzeugzustands ausgebildet ist, und mit einer Kontrolleinheit (24), die eine Anzeigeeinrichtung (22i) in Abhängigkeit einer Betätigung des mindestens einen Bedienelements (12) und/oder des ermittelten Fahrzeugzustands derart ansteuert, dass von der Anzeigeeinrichtung (22i) ein der zu bedienenden fahrzeugbezogenen Funktion und/oder dem ermittelten Fahrzeugzustand zugeordneter Anzeigeinhalt dargestellt wird, **dadurch gekennzeichnet, dass** die Kontrolleinheit (24) zur Ansteuerung der Anzeigeeinrichtung (22i) mittels einer RFID-Leseeinheit (34) eine Datenaustauschverbindung mit einem mit der Anzeigeeinrichtung (22i) zusammenwirkenden RFID-Transponder (48i) herstellt, wobei der auf der Anzeigeeinrichtung (22i) darzustellende Anzeigeeinhalt in einem dem RFID-Transponder (48i) zugeordneten Datenspeicher (56i) abgelegt ist und die Kontrolleinheit (24) bei Initiierung des Bediensystems (10) einen selbsttätigen Konfigurationsvorgang zur Anpassung des Bedien- und/oder Anzeigeumfangs des Bediensystems (10) entsprechend der in dem Datenspeicher (56i) abgelegten Anzeigeinhalte vornimmt.

2. Bediensystem nach Anspruch 1, **dadurch gekennzeichnet, dass** in dem Datenspeicher (56i) mehrere auf der Anzeigeeinrichtung (22i) darzustellende Anzeigeinhalte entsprechend unterschiedlicher zu bedienender fahrzeugbezogener Funktionen und/oder betriebsbedingt auftretender Fahrzeugzustände abgelegt sind.

3. Bediensystem nach Anspruch 1 oder 2, **dadurch gekennzeichnet, dass** die in dem Datenspeicher (56i) abgelegten Anzeigeinhalte Bestandteil einer menübasierten Benutzeroberfläche zur Bedienung einer Vielzahl von fahrzeugbezogenen Funktionen sind.

4. Bediensystem nach einem der Ansprüche 1 bis 3, **dadurch gekennzeichnet, dass** das mindestens eine Bedienelement (12) zur Bedienung einer Vielzahl von fahrzeugbezogenen Funktionen ausgebildet ist.

5. Bediensystem nach Anspruch 4, **dadurch gekennzeichnet, dass** die mittels des mindestens einen Bedienelements (12) zu bedienende fahrzeugbezogene Funktion fahrerseitig vorgebbar ist.

6. Bediensystem nach einem der Ansprüche 1 bis 5, **dadurch gekennzeichnet, dass** der RFID-Transponder (48i) baulich in die Anzeigeeinrichtung (22i) eingebunden ist.

7. Bediensystem nach einem der Ansprüche 1 bis 6, **dadurch gekennzeichnet, dass** die Anzeigeeinrichtung (22i) als folienartiges, vorzugsweise flexibles Anzeigeelement ausgebildet ist.

8. Bediensystem nach Anspruch 7, **dadurch gekennzeichnet, dass** das folienartige Anzeigeelement (22i) transparent oder semitransparent ausgebildet ist.

9. Bediensystem nach Anspruch 7 oder 8, **dadurch gekennzeichnet, dass** das folienartige Anzeigeelement (22i) eine Klebefläche zur Anbringung an einer Oberfläche des mindestens einen Bedienelements (12) und/oder eines Verkleidungselements des Kraftfahrzeugs aufweist.

10. Bediensystem nach einem der Ansprüche 1 bis 9, **dadurch gekennzeichnet, dass** die Anzeigeeinrichtung (22i) mittels des RFID-Transponders (48i) mit elektrischer Energie versorgt wird, wobei der RFID-Transponder (48i) insbesondere passiv ausgebildet ist.

11. Kraftfahrzeug, insbesondere landwirtschaftliches Nutzfahrzeug, mit einem Bediensystem (10) nach einem der vorhergehenden Ansprüche 1 bis 10.

## Claims

1. Operating system for a motor vehicle, comprising at least one operating element (12) which is provided for operating an associated vehicle-related function, and/or at least one detection device (30) which is designed to determine an operationally occurring vehicle state, and comprising a control unit (24) which actuates a display device (22i) as a function of activation of the at least one operating element (12) and/or of the determined vehicle state, in such a way that a display content which is assigned to the vehicle-related function to be operated and/or to the determined vehicle state is displayed by the display device (22i), **characterized in that**, in order to actuate the display device (22i), the control unit (24) establishes, by means of an RFID reading unit, a data exchange connection to an RFID transponder (48i) which interacts with the display device (22i), wherein the display content which is to be displayed on the display device (22i) is stored in a data memory (56i) which is assigned to the RFID transponder (48i), and, after initiation of the operating system (10), the control unit (24) carries out a self-activated configuration process for adapting the operating scope and/or display scope of the operating system (10) in accordance with the display contents stored in the data memory (56i).

2. Operating system according to Claim 1, **characterized in that** a plurality of display contents which are to be displayed on the display device (22i) are stored in the data memory (56i) in accordance with different vehicle-related functions to be operated and/or operationally occurring vehicle states.

3. Operating system according to Claim 1 or 2, **characterized in that** the display contents which are stored in the data memory (56i) are components of a menu-based user interface for operating a multiplicity of vehicle-related functions.

4. Operating system according to one of Claims 1 to 3, **characterized in that** the at least one operating element (12) is designed to operate a multiplicity of vehicle-related functions.

5. Operating system according to Claim 4, **characterized in that** the vehicle-related function which is to be operated by means of the at least one operating element (12) can be predefined at the driver end.

6. Operating system according to one of Claims 1 to 5, **characterized in that** the RFID transponder (48i) is structurally integrated into the display device (22i).

7. Operating system according to one of Claims 1 to 6, **characterized in that** the display device (22i) is embodied as a film-like, preferably flexible, display element.

8. Operating system according to Claim 7, **characterized in that** the film-like display element (22i) is of transparent or semi-transparent design.

9. Operating system according to Claim 7 or 8, **characterized in that** the film-like display element (22i) has an adhesive surface for attachment to a surface of the at least one operating element (12) and/or of a trim element of the motor vehicle.

10. Operating system according to one of Claims 1 to 9, **characterized in that** the display device (22i) is supplied with electrical energy by means of the RFID transponder (48i), wherein the RFID transponder (48i) is, in particular, of passive design.

11. Motor vehicle, in particular agricultural utility vehicle, having an operating system (10) according to one of the preceding Claims 1 to 10.

## Revendications

1. Système de commande pour un véhicule automobile, comprenant au moins un élément de commande (12), lequel est prévu pour commander une fonction associée en rapport avec le véhicule, et/ou au moins un dispositif de détection (30), lequel est configuré pour déterminer un état du véhicule qui se produit du fait de l'utilisation, et comprenant une unité de contrôle (24), laquelle commande un dispositif d'affichage (22i) en fonction d'un actionnement de l'au moins un élément de commande (12) et/ou de l'état déterminé du véhicule de telle sorte qu'un contenu d'affichage associé à la fonction en rapport avec le véhicule à commander et/ou à l'état déterminé du véhicule soit représenté par le dispositif d'affichage (22i), **caractérisé en ce que** l'unité de contrôle (24) établit une liaison d'échange de données avec un transpondeur RFID (48i) qui interagit avec le dispositif d'affichage (22i) en vue de commander le dispositif d'affichage (22i) au moyen d'une unité de lecture RFID (34), le contenu d'affichage à représenter sur le dispositif d'affichage (22i) étant stocké dans une mémoire de données (56i) associée au transpondeur RFID (48i) et l'unité de contrôle (24), lors de l'initiation du système de commande (10), procédant à une opération de configuration automatique en vue d'adapter l'étendue de la commande et/ou de l'affichage du système de commande (10) en fonction des contenus d'affichage stockés dans la mémoire de données (56i).

2. Système de commande selon la revendication 1, **caractérisé en ce que** plusieurs contenus d'affichage à représenter sur le dispositif d'affichage (22i) conformément aux différentes fonctions en rapport avec le véhicule à commander et/ou aux états du véhicule qui se produisent du fait de l'utilisation sont stockés dans la mémoire de données (56i).

3. Système de commande selon la revendication 1 ou 2, **caractérisé en ce que** les contenus d'affichage stockés dans la mémoire de données (56i) font partie d'une interface utilisateur à base de menus destinée à commander une pluralité de fonctions en rapport avec le véhicule.

4. Système de commande selon l'une des revendications 1 à 3, **caractérisé en ce que** l'au moins un élément de commande (12) est configuré pour commander une pluralité de fonctions en rapport avec le véhicule.

5. Système de commande selon la revendication 4, **caractérisé en ce que** la fonction en rapport avec le véhicule à commander au moyen de l'au moins un élément de commande (12) peut être prédéfinie du côté du conducteur.

6. Système de commande selon l'une des revendications 1 à 5, **caractérisé en ce que** le transpondeur RFID (48i) est intégré par construction dans le dispositif d'affichage (22i).

7. Système de commande selon l'une des revendications 1 à 6, **caractérisé en ce que** le dispositif d'affichage (22i) est réalisé sous la forme d'un élément d'affichage de type film, de préférence flexible.

8. Système de commande selon la revendication 7, **caractérisé en ce que** l'élément d'affichage (22i) de type film est réalisé transparent ou semi-transparent.

9. Système de commande selon la revendication 7 ou 8, **caractérisé en ce que** l'élément d'affichage (22i) de type film présente une face adhésive destinée à l'application sur une surface de l'au moins un élément de commande (12) et/ou d'un élément d'habillage du véhicule automobile.

10. Système de commande selon l'une des revendications 1 à 9, **caractérisé en ce que** le dispositif d'affichage (22i) est alimenté en énergie électrique au moyen du transpondeur RFID (48i), le transpondeur RFID (48i) étant notamment de configuration passive.

11. Véhicule automobile, notamment véhicule utilitaire agricole, comprenant un système de commande (10) selon l'une des revendications précédentes 1 à 10.
